(19) Europäisches Patentamt
European Patent Office
Office européen des brevets

(11) **EP 2 699 933 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **12718129.5**

(22) Anmeldetag: **17.04.2012**

(51) Int Cl.:
*G01S 3/808* (2006.01)     *G01S 11/14* (2006.01)

(86) Internationale Anmeldenummer:
**PCT/EP2012/056992**

(87) Internationale Veröffentlichungsnummer:
**WO 2012/143349 (26.10.2012 Gazette 2012/43)**

(54) **VERFAHREN UND VORRICHTUNG ZUM BESTIMMEN VON ZIELPARAMETERN MITTELS PASSIVEM SONAR UND SUPPORTWERTEN**

METHOD AND DEVICE FOR DETERMINING TARGET PARAMETERS

PROCÉDÉ ET DISPOSITIF DE DÉTERMINATION DE PARAMÈTRES D'UNE CIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.04.2011 DE 102011018278**

(43) Veröffentlichungstag der Anmeldung:
**26.02.2014 Patentblatt 2014/09**

(73) Patentinhaber: **ATLAS ELEKTRONIK GmbH
28309 Bremen (DE)**

(72) Erfinder: **STEIMEL, Ulrich
28876 Oyten (DE)**

(74) Vertreter: **Jeschke, Alexander
Weidner Stern Jeschke
Patentanwälte Partnerschaft
Rubianusstraße 8
99084 Erfurt (DE)**

(56) Entgegenhaltungen:
**EP-A- 2 397 865          DE-A1- 3 446 658
DE-B3-102007 019 444   DE-C2- 10 129 726
US-A1- 2008 316 862**

EP 2 699 933 B1

## Beschreibung

Die Erfindung betrifft ein Verfahren zum Bestimmen von Zielparametern durch richtungsselektiven Empfang von Schallwellen der im Oberbegriff von Anspruch 1 genannten Art sowie einer entsprechenden Vorrichtung gemäß dem Oberbegriff von Anspruch 10.

Zum Bestimmen von Zielparametern, insbesondere zum passiven Bestimmen, werden in der Sonartechnik Sensoren zum richtungsselektiven Empfang von Schallwellen eingesetzt. Dabei wird unter einem Sensor eine hydroakustische Empfangsantenne verstanden, welche sich auf einem Trägerfahrzeug, z.B. einem Oberflächenschiff oder einem U-Boot befindet.

Um Entfernung, Kurs und Geschwindigkeit eines Ziels, z.B. eines Oberflächenschiffs, U-Bootes oder Unterwasserlaufkörpers, als Zielparameter zu bestimmen, werden mit der Sonar-Empfangsantenne vom Ziel abgestrahlte oder gesendete Schallwellen empfangen und Peilwinkel zum Ziel gemessen. Aus zeitlich aufeinanderfolgenden, gemessenen Peilwinkeln sowie zu diesen Peilwinkeln zugehörigen Eigenpositionen des Trägerfahrzeugs werden die Zielparameter des Zieles geschätzt. Dabei wird vorausgesetzt, dass sich das Ziel gleichförmig, d.h. mit konstantem Kurs und konstanter Geschwindigkeit, bewegt.

In DE 34 46 658 C2 ist bspw. eine Filteranordnung zum Bestimmen von Zielparametern beschrieben. Dort werden die jeweils gemessenen Peilwinkel mit den geschätzten Peilwinkeln verglichen und eine Peilwinkeldifferenz gebildet. Bei Erreichen des Minimums entspricht der geschätzte Peilwinkel dem wahren Peilwinkel bis auf einen Restfehler. Dieser Restfehler ist abhängig von einer vorgebbaren Schwelle. Je nach aktuellem Szenarium konvergiert die jeweils als beste Lösung bestimmte Lösung, d.h. die optimierte Lösung, früher oder später gegen die tatsächlich richtige Lösung.

DE 10 2008 030 053 A1 zeigt ein Verfahren zum passiven Bestimmen von Zielparametern bei dem zusätzlich zu der optimierten Lösung die Zuverlässigkeit dieser Lösung angezeigt wird. Dazu werden während jedem Verarbeitungszyklus eine Vielzahl unterschiedlicher Zielbahnen sowie ein Qualitätsmaß zu jeder dieser angenommenen Zielbahnen berechnet. Aus der Verteilung des Qualitätsmaßes kann auf die Zuverlässigkeit der optimierten Lösung geschlossen werden.

DE 101 29 726 C2 zeigt ein Verfahren zum Bestimmen von Zielparametern bei dem die empfangenen Schallwellen einer Frequenzanalyse unterzogen werden. Die gemessene Empfangsfrequenz wird zusammen mit dem gemessenen Peilwinkel der Zieldatenschätzung zugrundegelegt. Es werden Zielpositionen und eine vom Ziel abgestrahlte oder gesendete Sendefrequenz geschätzt. Zu diesen Zielpositionen werden die zugehörigen geschätzten Peilwinkel ermittelt sowie die durch Dopplerverschiebung sich aus der geschätzten Sendefrequenz ergebenden zugehörigen geschätzten Empfangsfrequenzen. Die Differenzen zwischen den geschätzten und gemessenen Empfangsfrequenzen werden dann zusammen mit den Peilwinkeldifferenzen, welche sich zwischen geschätzten und gemessenen Peilungen ergeben, für die Bestimmung der Zielparameter verwendet. Dies ermöglicht eine Zielparameterbestimmung ohne Eigenmanöver des Trägerfahrzeugs.

Nach alledem liegt der Erfindung das Problem zugrunde, das Verfahren bzw. die Vorrichtung zum Bestimmen von Zielparametern zu verbessern.

Die Erfindung löst dieses Problem durch die Merkmale eines Verfahrens zum Bestimmen von Zielparametern gemäß Anspruch 1 sowie durch eine Vorrichtung mit den Merkmalen des Anspruchs 10.

Nach einer Zieldetektion werden zu jedem detektierten Ziel eine Zielposition geschätzt und dazu geschätzte Peilwinkel ermittelt. Zwischen den gemessenen und geschätzten Peilwinkeln wird dann eine Peilwinkeldifferenz bestimmt.

Aus einem Satz möglicher Supportwerte wird mittels eines Entscheidungsmoduls mindestens ein Supportwert bestimmt, welcher für die Durchführung des weiteren Verfahrens herangezogen wird. Unter einem Supportwert wird dabei ein Wert für einen zu bestimmenden Zielparameter verstanden, von dem angenommen wird, dass dieser Wert dem wahren Wert des Zielparameters entspricht. Ferner kann ein Supportwert auch ein Wert sein, aus dem mindestens ein zu bestimmender Zielparameter abgeleitet werden kann, wie bspw. eine Radialgeschwindigkeit des Ziels oder aber weitere, vom Wasserfahrzeug bzw. deren technischen Möglichkeiten abhängige Größen aus zu bestimmenden Zielparametern, wie Zielentfernung, Zielkurs, Zielgeschwindigkeit und/oder Zielsendefrequenz, abgeleitet werden können.

Ein Satz möglicher Supportwerte beschreibt diejenigen Supportwerte, die zum Zeitpunkt des aktuellen Verfahrenszyklus vorliegen. Quellen für Supportwerte können dabei verschiedene weitere Sensormessungen sein, wie bspw. Radarmessung, Aktivmessung, Passiv-Ranging-Sonar (PRS)-Messung und/oder Intercept-Detection-and-Ranging-Sonar (IDRS)-Messung. Die Supportwerte können jedoch auch aus übermittelten Daten, wie bspw. aus einem Automatic Identification System (AIS), aus Daten via Link oder von einem Torpedo, gewonnen werden, wobei AIS ein Funksystem bezeichnet, das durch einen Austausch von Navigations- und anderen Daten die Sicherheit und die Lenkung des Schiffsverkehrs verbessert und wobei die Daten via Link aus einer vernetzten Operationsführung stammen, bei der Plattformen, Sensoren und Effektoren sowie Führungssysteme von Teilstreitkräften in einem gemeinsamen informationstechnischen Netz miteinander verbunden sind. Auch manuell von einem Bediener vorgegebene Supportwerte, bspw. in Form von Schätzungen für Entfernung, Kurs oder Geschwindigkeit durch den Periskopbediener, sind für das erfindungsgemäße Verfahren anwendbar.

Ferner ist es, je nach technischen Möglichkeiten, denkbar, die Sendefrequenz eines Zieles, bspw. aus Klassifizierungsergebnissen anhand eines bekannten Schifftyps, zu bestimmen und als möglichen Supportwert zur Durchführung des erfindungsgemäßen Verfahrens heranzuziehen.

Unter Berücksichtigung mindestens eines dieser Supportwerte werden eine oder mehrere Zielbahnen mit jeweils zugehörigen Zielparametern und jeweils einer zugehörigen Bewertungsgröße in einer Zielbahnbestimmungseinheit ermittelt, wobei die Bewertungsgröße aus der zur jeweiligen Zielbahn zugehörigen Peilwinkeldifferenz und dem Supportwert oder den Supportwerten ermittelt wird.

Eine Auswertungseinheit ermittelt anhand der Bewertungsgröße eine beste Zielbahn mit zugehörigen Zielparametern, wobei die zugehörigen Zielparameter als die zu bestimmenden Zielparameter ausgegeben werden.

Durch die Verwendung von Supportwerten bei der Ermittlung der Bewertungsgrößen, wird vorteilhafterweise schneller eine beste Zielbahn ermittelt bzw. bei Vorliegen mehrerer Bewertungsgrößen eine genauere Angabe über die Zuverlässigkeit der besten Zielbahn ermöglicht.

In einer bevorzugten Ausführungsform der Erfindung werden mittels eines Datenerfassungsmoduls Daten über die möglichen Supportwerte gesammelt. Diese Daten geben an, welche Supportwerte aus einer Menge aller Supportwerte zur Verfügung stehen. Wie vorstehend beschrieben, gibt es verschiedene Quellen für die Bereitstellung von Supportwerten. Es sind jedoch nicht immer alle Supportwerte verfügbar. Die Menge der möglichen Supportwerte setzt sich aus den momentan verfügbaren Werten aus der Menge der theoretisch möglichen Werte zusammen.

Ferner werden diese möglichen Supportwerte vorteilhafterweise mit Daten über deren Zuverlässigkeit versehen. So ist bspw. ein vom Bediener über das Periskop geschätzter Entfernungswert weniger zuverlässig als ein zusätzlicher Entfernungswert aufgrund einer durchgeführten Radar-Messung.

Die Daten über die möglichen Supportwerte, die momentan verfügbar sind, mit den Daten über deren Zuverlässigkeit werden einem Entscheidungsmodul übergeben. Dieses ermittelt daraus vorteilhafterweise den oder die Supportwerte mit jeweils einem zugehörigen Gewichtsfaktor, welche dann bei der Durchführung des erfindungsgemäßen Verfahrens berücksichtigt werden.

In einer weiteren bevorzugten Ausführungsform der Erfindung wird die Bewertungsgröße einer Zielbahn aus der Summe der, insbesondere vorteilhafterweise gewichteten, Quadrate der Differenzen für die entlang der Zielbahn angenommenen Peilwinkel und die zugeordneten gemessenen Peilwinkel unter Berücksichtigung mindestens eines, insbesondere vorteilhafterweise gewichteten, Supportwertes berechnet. Unter der beispielhaften Annahme einer Verwendung eines Entfernungs-Supportwertes lässt sich die Bewertungsgröße dann mittels folgender Formel angeben:

$$Q(i, j) = \sum_{k=1}^{n} W_k{}^2 \left[ B_{meas,k} - B_{est,k} \right]^2 + W_R{}^2 \left[ R_{\text{sup}} - R_{est} \right]^2$$

Dabei bezeichnet Q(i, j) die Bewertungsgröße für eine angenommene Zielbahn Z(i, j). Der Index k läuft von 1 bis n, wobei n die Anzahl gemessener Peilwinkel $B_{meas,k}$ bzw. angenommener Peilwinkel $B_{est,k}$ längs der Zielbahn angibt. $W_k$ bezeichnet Gewichtsfaktoren, welche bspw. bei einer Vorfilterung ermittelten inversen Standardabweidungen der gemessenen Peilwinkel $B_{meas,k}$ entsprechen. $R_{\text{sup}}$ bezeichnet den Entfernungs-Supportwert mit zugehöriger Zeitreferenz T und Rest bezeichnet die zum Zeitpunkt T angenommene Zielentfernung. Diejenigen Zielbahnen Z(i, j) erhalten also eine bessere Bewertungsgröße Q(i, j), deren Zielentfernung zum Zeitpunkt T in der Nähe des Entfernungs-Supportwertes $R_{\text{sup}}$ liegen.

Die Erfindung ist jedoch nicht auf die Verwendung eines Entfernungs-Supportwertes beschränkt. Vielmehr sind weitere Supportwerte entsprechend vorstehend genannter Formel umsetzbar, indem bei der Berechnung der Bewertungsgröße ein Term bestehend aus einem, insbesondere quadrierten, zum Supportwert zugehörigem Gewichtsfaktor sowie einer, insbesondere quadrierten, Differenz aus Supportwert und zugehörigem Schätzwert berücksichtigt wird.

Ferner ist ebenso die Verwendung mehrerer Supportwerte zum Bestimmen der Zielparameter möglich. Die vorstehend genannte Formel der Bewertungsgröße wird hierbei um eine entsprechende Anzahl Terme erweitert, so dass je verwendetem Supportwert ein Term, bestehend aus Gewichtsfaktor und Differenz aus Supportwert und Schätzwert, berücksichtigt wird.

Gemäß einer weiteren bevorzugten Ausführungsform der Erfindung werden die empfangenen und vom Richtungsbildner richtungsselektiv verarbeiteten Schallsignale einer Frequenzanalyse, insbesondere einer Lofar-Analyse oder einer Demon-Analyse, unterzogen, wobei bei der Demon-Analyse die Signale auf das Vorhandensein einer Amplitudenmodulation und bei der Lofar-Analyse die Signale an sich nach auffälligen Frequenzen hin untersucht werden. Dabei wird die Frequenz mindestens einer Spektrallinie als Empfangsfrequenz zu jeweils einem Peilwinkel bestimmt und zusammen mit dem gemessenen Peilwinkel der Zielparameterschätzung zugrunde gelegt. Dabei können auch die gemessenen Frequenzen mehrerer Spektrallinien zusammengefasst werden und Messwerte für die Empfangsfrequenz pro Peilwinkel bilden.

Aus der anhand der gemessenen und geschätzten Peilwinkel ermittelten geschätzten Zielposition und ihrer zeitlichen Änderung werden eine Dopplerverschiebung und eine vom Ziel abgestrahlte oder gesendete Sendefrequenz geschätzt. Die geschätzte Sendefrequenz wird entsprechend der geschätzten Dopplerverschiebung frequenzverschoben und bildet die geschätzte Dopplerfrequenz bzw. geschätzte Empfangsfrequenz, von der die gemessene Empfangsfrequenz abgezogen wird. Die geschätzte Sendefrequenz ist allerdings vorwiegend fehlerbehaftet und somit auch die geschätzte Dopplerfrequenz. Die wahre Sendefrequenz des Zieles lässt sich aus der Differenz aus der gemessenen Empfangsfrequenz und der geschätzten Dopplerfrequenz ermitteln, denn wenn diese Differenz annähernd Null ist, entspricht die geschätzte Dopplerfrequenz der gemessenen Empfangsfrequenz. Die zugrunde liegende Sendefrequenz entspricht annähernd der wahren Sendefrequenz und kann zur Positionsbestimmung des Zieles herangezogen werden. Die Bewertungsgröße wird dann aus den Peilwinkeldifferenzen, den Frequenzdifferenzen und mindestens einem Supportwert, insbesondere einem Supportwert der Sendefrequenz des Ziels, für eine oder mehrere Zielbahnen ermittelt.

Die Berücksichtigung der Sendefrequenz bzw. der Dopplerverschiebung bringt den Vorteil mit sich, eine Zielparameterbestimmung ohne Eigenmanöver des Trägerfahrzeugs durchführen zu können. Ein weiterer Vorteil ist die Möglichkeit der Verwendung eines Supportwertes für die Sendefrequenz des Ziels, da in diesem Fall die Sendefrequenz als weiterer Zielparameter mittels des erfindungsgemäßen Verfahrens besser bestimmbar ist.

In einer weiteren bevorzugten Ausführungsform der Erfindung wird während jedem Verarbeitungszyklus von einer Reihe aufeinanderfolgender Verarbeitungszyklen die Bewertungsgröße unter Berücksichtigung mindestens eines Supportwertes mindestens einer Zielbahn iterativ minimiert. Dazu werden ausgehend von einer Anfangsposition des Ziels, die z.B. willkürlich als Startposition auf einem ersten Peilstrahl gewählt wird oder durch andere an Bord befindliche Sensoren bekannt ist, Positionen für das Ziel berechnet und daraus geschätzte Peilwinkel bestimmt. Die jeweils gemessenen Peilwinkel werden mit den geschätzten Peilwinkeln verglichen und eine Peilwinkeldifferenz gebildet, die unter Berücksichtigung des Supportwertes die Bewertungsgröße bildet, welche iterativ minimiert wird. Der Vorteil liegt darin, dass bei Erreichen des Minimums der geschätzte Peilwinkel dem wahren Peilwinkel bis auf einen Restfehler entspricht. Der Restfehler ist vorteilhafterweise abhängig von einem vorgebbaren Schwellenwert. Die Berücksichtigung mindestens eines Supportwertes zum iterativen Minimieren der Bewertungsgröße führt vorteilhaft zu einer schnelleren Konvergenz des Verfahrens.

In einer weiteren bevorzugten Ausführungsform der Erfindung wird eine Vielzahl unterschiedlicher Zielbahnen ermittelt, wobei ein zu einem ersten gemessenen Peilwinkel zugehöriger erster Peilstrahl sowie ein zu einem zuletzt gemessenen Peilwinkel zugehöriger letzter Peilstrahl festgelegt werden. Die angenommenen Zielbahnen beginnen somit auf dem ersten Peilstrahl in einem Anfangspunkt und enden auf dem letzten Peilstrahl in einem Endpunkt. Die Abstände der angenommenen Anfangspunkte bzw. Endpunkte untereinander auf dem ersten bzw. letzten Peilstrahl bestimmen vorteilhaft die Genauigkeit der Verteilung der Bewertungsgröße. Vorzugsweise sind der erste und/oder der letzte Peilstrahl variierbar.

Für jede angenommene Zielbahn wird eine Bewertungsgröße aus den geschätzten Peilwinkeln, den gemessenen Peilwinkeln sowie mindestens einem Supportwert ermittelt. Anhand dieser Bewertungsgröße lässt sich vorteilhafterweise eine beste Zielbahn ermitteln, deren zugehörige Zielparameter als beste Lösung ausgegeben werden. Die beste Zielbahn ist dabei diejenige Zielbahn, deren Bewertungsgröße eine beste Qualität bzw. die bestmögliche Zuverlässigkeit anzeigt.

Durch die Ermittlung einer Vielzahl unterschiedlicher Zielbahnen ergibt sich der Vorteil, dass durch die Verteilung der Bewertungsgröße Rückschlüsse auf die Zuverlässigkeit der besten Lösung möglich sind, wobei die Verteilung der Bewertungsgröße durch den bzw. die Supportwerte vorteilhafterweise beeinflusst wird.

Gemäß einer weiteren vorteilhaften Ausführungsform der Erfindung werden zum Bestimmen der Zielparameter nur diejenigen Zielbahnen berücksichtigt, deren zugehörige Bewertungsgröße wenigstens einen vorbestimmten Schwellenwert unterschritten hat. Nur diese Zielbahnen sind als potenzielle Lösungen relevant. Durch die Verwendung eines oder mehrerer Supportwerte bei der Ermittlung der Bewertungsgröße, wird die Anzahl der Zielbahnen, deren Bewertungsgröße den Schwellenwert unterschritten hat, weiter vorteilhaft eingeschränkt.

In einer weiteren Ausführungsform der Erfindung werden während jedem Verarbeitungszyklus die Zielparameter aller oder einer Vielzahl der Zielbahnen mittels eines oder mehrerer Diagramme einer aus der Bewertungsgröße abgeleiteten Qualitätsangabe über den Zielkurs und/oder die Zielgeschwindigkeit und/oder die Zielentfernung graphisch visualisiert auf einer Anzeigevorrichtung dargestellt. Eine derartige Visualisierung erlaubt ein genaues Ablesen der Zielparameter zu einer ausgewählten Qualitätsangabe. Insbesondere durch Auswählen eines Zielparameters können dann alle zu dieser Lösung zugehörigen Zielparameter angezeigt werden, wodurch der Bediener unmittelbar erkennen kann, ob eine Lösung wahrscheinlich ist oder nicht.

In einer weiteren Ausführungsform der Erfindung werden während jedem Verarbeitungszyklus zu allen oder einer Vielzahl der Zielbahnen zukünftige Zielpositionen des Ziels ermittelt. Diese zukünftigen Zielpositionen werden aus den zu der jeweiligen Zielbahn zugehörigen Zielparametern, insbesondere Zielkurs und Zielgeschwindigkeit, für einen vorbestimmten Zeitraum ermittelt. Der Vorteil dieser zukünftigen Zielpositionen liegt darin, dem Bediener anzuzeigen, welche möglichen Lösungen die bis jetzt vorliegenden Peilungen zulassen und wie zuverlässig die beste Lösung ist. Die Berücksichtigung mindestens eines Supportwertes sorgt vorteilhafterweise dafür, dass die Anzahl der zulässigen möglichen Lösungen weiter eingeschränkt wird.

Auf einer Anzeigevorrichtung werden vorteilhaft ein die zukünftigen Zielpositionen darstellendes zukünftiges Erwartungsgebiet, wenigstens ein Entfernungslösungsraum zum Anzeigen der möglichen Lösungen für die Zielentfernung und/oder die beste Zielbahn graphisch und/oder numerisch dargestellt. Die Darstellung erfolgt bevorzugt in Form einer Lage-Darstellung, insbesondere PPI-Darstellung (Plan-Position-Indicator-Darstellung). Das hat den Vorteil, die zu bestimmenden Zielparameter mit einer optimierten besten Lösung direkt in einer einzigen Darstellung zusammen mit der zugehörigen, eine beste Qualität anzeigender Bewertungsgröße vorzugsweise in der gewohnte Lage-Darstellung graphisch zu visualisieren, um den Bediener den Umgang mit der Sonaranlage zu erleichtern.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:

Fig. 1     eine schematische Darstellung von zwei Peilstrahlen, unter denen ein Ziel zu zwei unterschiedlichen Zeitpunkten gepeilt worden ist,

Fig. 2     ein Szenarium mit einer Vielzahl von Peilstrahlen von einem Trägerfahrzeug zu einem Ziel,

Fig. 3     eine schematische Darstellung der Geschwindigkeitskomponenten zur Veranschaulichung der Ermittlung einer Radialgeschwindigkeit,

Fig. 4     eine schematische Darstellung von zwei Peilstrahlen, unter denen ein Ziel zu zwei unterschiedlichen Zeitpunkten gepeilt worden ist mit einer Vielzahl von möglichen Zielbahnen,

Fig. 5     ein Blockschaltbild zur Veranschaulichung eines Verfahrens sowie einer Vorrichtung zum Bestimmen von Zielparametern,

Fig. 6 A-C     drei zweidimensionale Diagramme zur Veranschaulichung der Qualität über drei Zielparameter und

Fig. 7     eine Lage-Darstellung des in Fig. 6 A-C gezeigten Lösungsraumes.

An Bord eines Wasserfahrzeugs, insbesondere eines U-Bootes, befinden sich mehreren Anordnungen von Wasserschallaufnehmern, insbesondere elektroakustische und/oder optoakustische Wandler. Eine derartige Wandleranordnung befindet sich bspw. als Linearantenne jeweils auf einer Seite des Wasserfahrzeugs oder als Zylinderbasis im Bug des Wasserfahrzeugs. Eine weitere Anordnung von Wasserschallaufnehmern kann als Schleppantenne hinter dem Wasserfahrzeug hergeschleppt werden.

Empfangssignale derartiger Wasserschallaufnehmer werden zu Gruppensignalen benachbarten Richtcharakteristiken mittels eines Richtungsbildners innerhalb der Sonar-Empfangsanlage zusammengefasst. Dazu werden die Empfangssignale entsprechend ihrer Anordnung laufzeit- und/oder phasenverzögert zu Gruppensignalen aufaddiert.

In Abhängigkeit der verwendeten Zeitverzögerungskoeffizienten werden den jeweiligen Gruppensignalen Peilwinkel zugeordnet, deren Intensitätswerte, insbesondere Pegel, ermittelt werden. Der daraus resultierende Intensitätsverlauf, insbesondere Pegelverlauf, liefert lokale Maxima, welche zu Zielen gemessene Peilwinkel darstellen.

Eine derartige Sonar-Empfangsanlage verfügt über einen Schätzfilter zum Bestimmen von Zielparametern aus den zum Ziel gemessenen Peilwinkeln, zugehörigen Eigenpositionen des Trägerfahrzeugs sowie mindestens einem Supportwert. Dabei werden die Peilwinkel vom Trägerfahrzeugs längs seiner Bewegungsbahn zum Ziel gemessen, während sich das Ziel mit konstanter Geschwindigkeit auf einem Zielkurs von einer ersten Zielposition zu einer zweiten Zielposition bewegt. Die Bewegungsbahn des Trägerfahrzeugs besteht dabei vorzugsweise aus einem oder mehreren sogenannten Eigenlegs, wobei ein Eigenleg einen Abschnitt unbeschleunigter geradliniger Bewegung bezeichnet, d.h. auf dem sich das Trägerfahrzeug mit annähernd konstantem Kurs und konstanter Geschwindigkeit bewegt.

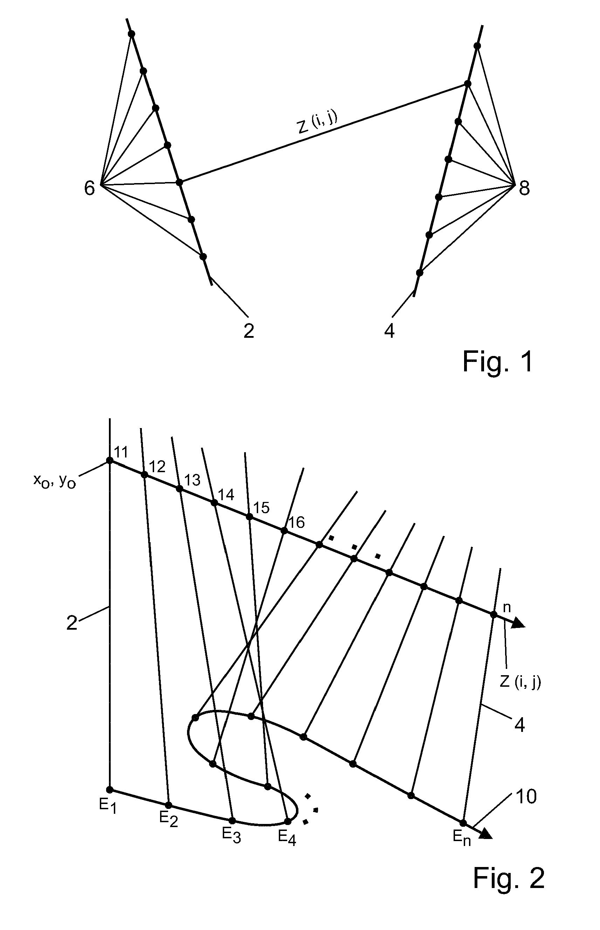

Fig. 1 zeigt eine schematische Darstellung von zwei Peilstrahlen 2, 4, unter denen ein Ziel zu zwei unterschiedlichen Zeitpunkten gepeilt worden ist. Ein erster Peilstrahl 2 gehört zu einer Anfangspeilung und ein weiterer, insbesondere letzter, Peilstrahl 4 zu einer zu einem späteren Zeitpunkt erfolgten Endpeilung. Es handelt sich somit bei diesen Peilstrahlen 2, 4 jeweils um den ersten bzw. letzten zur Bestimmung der Zielparameter herangezogenen Peilstrahl. Sie werden automatisch oder manuell durch Bedienereingriff festgelegt.

Unter der Annahme, dass die Zielentfernung unbekannt sei, kann sich das Ziel in verschiedenen Positionen 6 auf dem ersten Peilstrahl 2 sowie ebenso in verschiedenen Positionen 8 auf dem letzten Peilstrahl 4 befunden haben.

Ferner ist eine mögliche Zielbahn Z(i, j) eingetragen, wobei der Index i eine der möglichen Positionen 6 auf dem ersten Peilstrahl 2 und der Index j eine der möglichen Positionen 8 auf dem letzten Peilstrahl 4 bezeichnet.

Fig. 2 zeigt eine schematische Darstellung eines möglichen Szenariums mit einer Vielzahl von Peilstrahlen von einem Trägerfahrzeug zu einem Ziel. Dabei fährt das Trägerfahrzeug mit einer beobachtenden Sonar-Empfangsanlage auf seiner Bewegungsbahn 10 und nimmt n Peilungen an verschiedenen Eigenpositionen $E_1$, $E_2$, ..., $E_n$ zu einem Ziel auf, welches sich von einem ersten Peilstrahl 2 über Peilstrahlen 11, 12, 13 usw. bis zum n-ten Peilstrahl auf seiner Zielbahn Z(i, j) bewegt. In diesem Ausführungsbeispiel ist der n-te Peilstrahl als der letzte Peilstrahl 4 festgelegt.

Unter Annahme eines rechtwinkligen X-Y-Koordinatensystems, dessen Ursprung die Eigenposition $E_0$ zum Zeitpunkt $t_0$ = 0 ist, wird eine Anfangsposition des Ziels, entweder willkürlich oder aus zusätzlichen Sensormessungen ermittelt und als Startposition $X_0$, $Y_0$ auf dem ersten Peilstrahl 2 gewählt.

Ausgehend von dieser Startposition des Ziels, wird zu den jeweiligen gemessenen Peilwinkeln $B_{meas}$ unter Hinzuziehung von geschätzten Geschwindigkeitskomponenten $V_X$ und $V_Y$ des Ziels eine Position des Ziels geschätzt und ein zugehöriger geschätzter Peilwinkel $B_{est}$ berechnet. Entlang dieser Zielbahn Z(i, j) wird zwischen den gemessenen Peilwinkeln $B_{meas}$ und den geschätzten Peilwinkeln $B_{est}$ eine Summe von gewichteten Quadraten von Peilwinkeldifferenzen gebildet, welche iterativ minimiert wird. Die beste Zielbahn ist bestimmt, wenn diese Summe Null oder annähernd Null ist, d.h. die zugehörigen geschätzten Peilwinkel $B_{est}$ entsprechen annähernd den wahren Peilwinkeln $B_{true}$.

Um das iterative Minimieren der Peilwinkeldifferenzen zu stützen, wird mindestens ein Supportwert bei der Durchführung des Verfahrens berücksichtigt, um diesem Verfahren zu einer schnelleren Konvergenz zu verhelfen. Unter einem Supportwert wird dabei ein Wert verstanden, welcher als richtig angenommen wird und der zur Positionsbestimmung des Ziels herangezogen werden kann. Z.B. wird als Supportwert ein bereits bekannter Zielparameter, wie bspw. eine Zielentfernung zu einem gegebenen Zeitpunkt, eine Zielgeschwindigkeit, ein Zielkurs oder eine Zielsendefrequenz, festgelegt. Es ist jedoch auch jedwede andere Größe als Supportwert heranziehbar, aus der eine Komponente zur Positionsbestimmung des Ziels ermittelbar ist.

Quellen für zu verwendende Supportwerte sind dabei weitere, an Bord befindliche Sensoren zum Übertragen bzw. Empfangen von Informationssignalen und/oder vom Bediener ermittelte Messsignale. Da jedoch nicht immer alle theoretisch möglichen Supportwerte zur Verfügung stehen, weil z.B. das Ziel nicht von allen Sensoren erfasst wird, werden Daten über mögliche Supportwerte in einem Entscheidungsmodul gesammelt. Somit ist feststellbar, welche Supportwerte aktuell verfügbar sind.

Das Entscheidungsmodul wählt mindestens einen Supportwert aus den möglichen Supportwerten aus, welcher zur Durchführung des erfindungsgemäßen Verfahrens berücksichtigt wird. Die Auswahl erfolgt dabei durch vordefinierte Algorithmen oder manuell durch Bedienereingriff.

Zusätzlich versieht das Entscheidungsmodul den bzw. die ausgewählten Supportwerte mit jeweils einem Gewichtsfaktor, welcher der Zuverlässigkeit des jeweiligen Supportwertes entspricht und angibt, in welchem Maß der Supportwert bei der Durchführung des erfindungsgemäßen Verfahrens berücksichtigt wird.

Für die Zielparameterbestimmung wird zu der angenommenen Zielbahn Z(i, j) eine Bewertungsgröße aus der Peilwinkeldifferenz zwischen geschätzten und gemessenen Peilwinkeln unter Berücksichtigung mindestens eines Supportwertes, bspw. eines Entfernungs-Supportwertes $R_{sup}$, ermittelt:

$$\sum_{k=1}^{n} W_k{}^2 \left[B_{meas,k} - B_{est,k}\right]^2 + W_R{}^2 \left[R_{\text{sup}} - R_{est}\right]^2 = Q(i, j)$$

Dabei bezeichnet Q(i, j) die Bewertungsgröße für eine angenommene Zielbahn Z(i, j). Der Index k läuft von 1 bis n, wobei n die Anzahl der Peilwinkel längs der Zielbahn angibt. $W_k$ bezeichnet Gewichtsfaktoren, $B_{est,k}$ bezeichnet den angenommenen Peilwinkel des k-ten Peilstrahls, der mit dem gemessenen Peilwinkel $B_{meas,k}$ korrespondiert. Ferner bezeichnet $R_{sup}$ den Entfernungs-Supportwert, $R_{est}$ die angenommene Entfernung zum Ziel und $W_R$ einen Gewichtsfaktor.

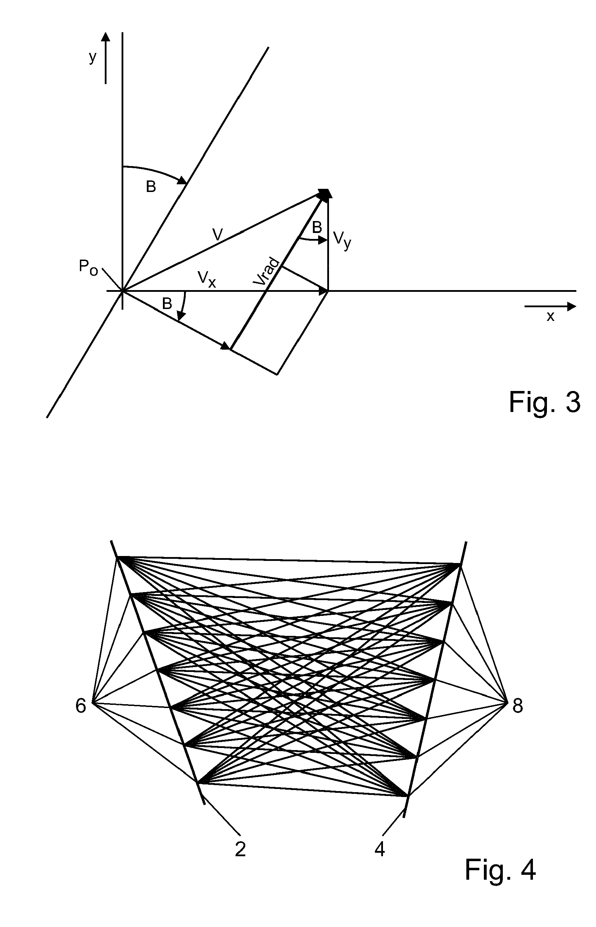

Fig. 3 zeigt bspw. eine schematische Darstellung der Geschwindigkeitskomponenten $V_X$, $V_Y$ des Ziels in einem X-Y-Koordinatensystem. Das Ziel hat hierbei seine Position $P_0$ mit der Geschwindigkeit V verlassen, wobei sich die Geschwindigkeit V aus der zugehörigen Geschwindigkeitskomponente $V_X$ in X-Richtung und der zugehörigen Geschwindigkeitskomponente $V_Y$ in Y-Richtung zusammensetzt. Unter Kenntnis des Peilwinkels B werden die Geschwindigkeitskomponenten $V_X$ und $V_Y$ des Ziels in eine radiale Geschwindigkeitskomponente $V_{rad}$ umgerechnet:

$$V_{rad} = V_X \cdot \sin B + V_Y \cdot \cos B$$

Hat man z.B. durch eine Aktiv-Sonaranlage Messungen für eine Peilung B und die zugehörige Radialgeschwindigkeit V$_{rad}$ des Zieles verfügbar, so kann man mittels obiger Gleichung aus den Schätzwerten der Geschwindigkeitskomponenten V$_X$ und V$_Y$ eine Schätzung für V$_{rad}$ bestimmen:

$$V_{rad,est} = V_{X\,est} \cdot \sin B + V_{Y\,est} \cdot \cos B$$

Bei der Ermittlung der Bewertungsgröße kann dann ein Supportwert für die Radialgeschwindigkeit wie folgt berücksichtigt werden:

$$\sum_{k=1}^{n} W_k{}^2 \left[ B_{meas,k} - B_{est,k} \right]^2 + W_{Vrad}{}^2 \left[ V_{rad} - V_{rad,est} \right]^2 = Q(i,j)$$

Iterativ wird diese Bewertungsgröße Q(i, j) solange verkleinert, bis eine vorbestimmte Fehlergrenze unterschritten ist. Die zugrundeliegende geschätzte Position wird als Zielposition erkannt und die zugehörigen Zielparameter ermittelt.

Für den Fall, dass die Empfangssignale der Sonar-Empfangsanlage einer Frequenzanalyse, bspw. Lofar-Analyse oder einer Demon-Analyse, unterzogen werden, kann eine geschätzte Zielsendefrequenz als Supportwert bei der Zielparameterbestimmung mit einbezogen werden.

Aus einer gemessenen Empfangsfrequenz und der Annahme einer üblichen Fahrgeschwindigkeit eines Wasserfahrzeugs ist eine mögliche Sendefrequenz des Ziels als Anfangswert zu schätzen. Anhand des geschätzten Peilwinkels B$_{est}$ und den dazu gehörenden Geschwindigkeitskomponenten wird eine Dopplerverschiebung ermittelt. Zusammen mit der angenommenen Sendefrequenz des Ziels ergibt sich eine geschätzte Dopplerfrequenz Fest und eine Frequenzdifferenz aus Empfangsfrequenz F$_{meas}$ und geschätzter Dopplerfrequenz Fest zu jedem Peilwinkel.

Für die Zielparameterbestimmung wird zu der angenommenen Zielbahn Z(i, j) eine Bewertungsgröße Q(i, j) aus der Peilwinkeldifferenz zwischen geschätzten und gemessenen Peilwinkeln, der Frequenzdifferenz und unter Berücksichtigung mindestens eines Supportwertes, bspw. eines Sendefrequenz-Supportwertes, ermittelt:

$$\sum_{k=1}^{n} \left[ W_k^2 \left[ B_{meas,k} - B_{est,k} \right]^2 + W_{F,k}^2 \left[ F_{meas,k} - F_{est,k} \right]^2 \right] + W_F^2 \left( F_{sup} - F_{S\,est} \right)^2 = Q(i,j)$$

Eine mögliche Quelle für den Sendefrequenz-Supportwert F$_{sup}$ ist bspw. ein Klassifizierungsergebnis, bei dem das Ziel unter einem bestimmten Schiffstyp erkannt wurde und dem Ziel spezifische Frequenzlinien zuzuordnen sind.

Auch für den Fall, das die Empfangsfrequenz bzw. Sendefrequenz des Ziels berücksichtigt wird, wird die Bewertungsgröße Q(i, j) solange verkleinert, bis eine Fehlergrenze unterschritten ist. Die zugrundeliegende geschätzte Position wird als Zielposition erkannt und die zugehörigen Zielparameter ermittelt. Die Berücksichtigung eines oder mehrerer Supportwerte führt zu einer schnelleren Konvergenz des Verfahrens.

Gemäß einem alternativen Ausführungsbeispiel des erfindungsgemäßen Verfahrens wird eine Vielzahl unterschiedlicher Zielbahnen ermittelt.

Fig. 4 zeigt eine schematische Darstellung einer Vielzahl möglicher Zielbahnen Z(i, j). Es sind zwei Peilstrahlen 2, 4, unter denen das Ziel zu zwei unterschiedlichen Zeitpunkten gepeilt worden ist, dargestellt. Zum Bestimmen der Zielparameter werden eine Mehrzahl von Positionen 6 auf dem ersten Peilstrahl 2 sowie eine Mehrzahl von Positionen 8 auf dem letzten Peilstrahl 4 gewählt. Diese Positionen entsprechen somit den Anfangs- bzw. Endpositionen möglicher Zielbahnen Z(i, j), wobei der Index i eine Position 6 auf dem ersten Peilstrahl 2 und der Index j eine Position 8 auf dem letzten Peilstrahl 4 bezeichnet.

Bevorzugt werden diejenigen Zielbahnen Z(i, j) im weiteren Verfahrensablauf eliminiert, die zu unmöglichen Lösungen gehören. Das können bspw. Zielbahnen sein, deren Lösungen zu Positionen über Land führen oder mit anderen Schiffsfahrtshindernissen kollidieren würden. Ferner können die Zielbahnen Z(i, j) ausgeschlossen werden, deren zugehörige Zielparameter größer als ein maximal vorgebbarer Wert sind.

Zu jeder Zielbahn Z(i, j) des verbleibenden Lösungsraumes wird eine Bewertungsgröße Q(i, j), wie vorstehend beschrieben, ermittelt. Bevorzugt werden dann nur diejenigen Zielbahnen berücksichtigt, deren zugehörige Bewertungsgröße wenigstens einen vorbestimmten Schwellenwert unterschritten hat, da nur diese als relevante Lösungen in Frage kommen.

Aus diesen potentiell möglichen Zielbahnen Z(i, j) wird anhand der zugehörigen Bewertungsgröße Q(i, j) eine beste Zielbahn $Z_{best}$ mit der eine maximal zu erreichende Qualität anzeigenden Bewertungsgröße ermittelt. Die Berücksichtigung mindestens eines Supportwertes sorgt dafür, dass die Lösungen in der Umgebung des Supportwertes stärker gewichtet werden.

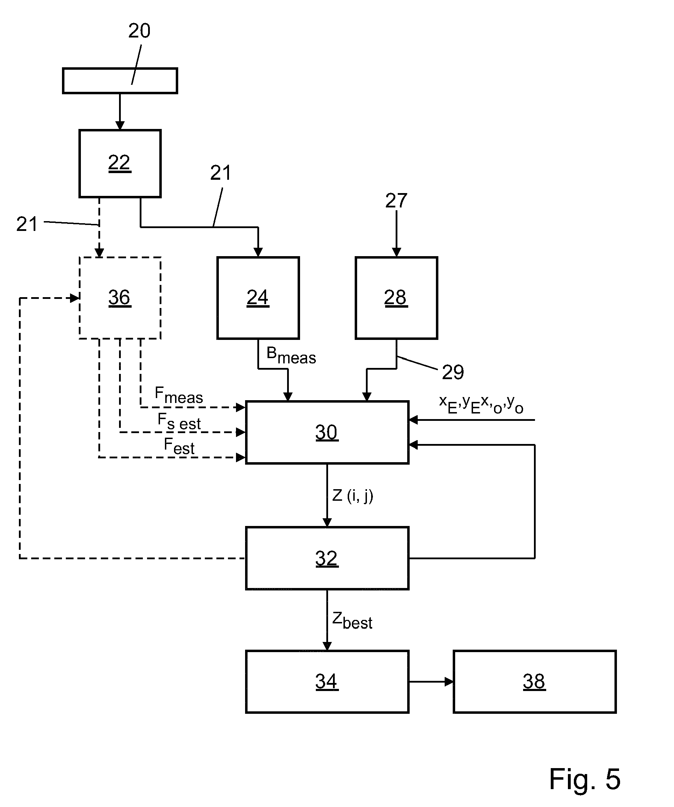

Fig. 5 veranschaulicht eine erfindungsgemäße Vorrichtung zur Durchführung des erfindungsgemäßen Verfahrens zum Bestimmen der Zielparameter. Mittels einer Anordnung von Wasserschallaufnehmern 20 werden Schallwellen von einem Ziel empfangen und ihre Empfangssignale in einem Richtungsbildner 22 durch Laufzeit- oder Phasenverzögerungen zu Gruppensignalen zusammengefasst. Eine Messschaltung 24 bestimmt dann gemessene Peilwinkel $B_{meas}$ zu einem Ziel.

In Abhängigkeit von den technischen Möglichkeiten des Wasserfahrzeugs sind verschiedene Quellen für mögliche Supportwerte denkbar. Ein Supportwert für die Entfernung zum Ziel lässt sich in Verbindung mit einer zugehörigen Zeitreferenz bspw. aus einer Radarmessung, einer Aktivmessung, einer Periskopmessung über einen integrierten Laserentfernungsmesser, einer Passiv-Ranging-Sonar-Messung, einer Intercept-And-Ranging-Sonar-Messung, Empfangsdaten des Auto-Identification-Systems, über Link übertragene Informationen, vorliegender Torpedomessung im Aktivmode oder Torpedo-Schätzung oder einer manuellen Eingabe durch Periskopbediener ermitteln.

Ein Supportwert für die Geschwindigkeit lässt sich bspw. aus einer Schätzung der DEMON-Analyse, einer Passiv-Ranging-Sonar-Schätzung, Empfangsdaten des Auto-Identification-Systems, über Link übertragene Informationen, vorliegende Torpedo-Schätzung, Radar-Schätzung oder einer manuellen Eingabe durch den Periskopbediener gewinnen.

Ein Supportwert für den Kurs lässt sich bspw. aus einer Passiv-Ranging-Schätzung, Empfangsdaten des Auto-Identification-Systems, über Link übertragene Informationen, Torpedo-Schätzungen, Radar-Schätzungen oder einer manuellen Eingabe als Lagewinkel durch den Periskopbediener ermitteln.

Die Radialgeschwindigkeit des Ziels als Supportwert lässt sich bspw. mittels eines Aktivsonars als Radialkomponente aus einer Dopplermessung ermitteln.

Die Sendefrequenz als Supportwert lässt sich bspw. aus Klassifizierungsergebnissen ableiten.

Die Daten über die möglichen Supportwerte 27 werden mittels eines Datenerfassungsmoduls erfasst und einem Entscheidungsmodul 28 übergeben. Dieses wählt anhand der über die vorliegenden Quellen gesammelten Daten mindestens einen Supportwert 29 aus, welcher bei der Durchführung des weiteren Verfahrens berücksichtigt wird. Die Auswahl erfolgt in Abhängigkeit der detektierten Ziele für jedes Ziel separat. Ferner ermittelt das Entscheidungsmodul 28 zu den Supportwerten 29 einen jeweiligen zugehörigen Gewichtsfaktor w, welcher die Zuverlässigkeit des Supportwerts 29 berücksichtigt.

Das erfindungsgemäße Verfahren beinhaltet zum einen eine Berechnung des gesamten Lösungsraumes, indem eine Vielzahl von Zielbahnen Z(i, j) mit zugehöriger Bewertungsgröße Q(i, j) ermittelt wird, und zum anderen ein iteratives Verfahren zum Ermitteln einer besten Lösung. Vorzugsweise werden beide Vorgehensweisen parallel durchgeführt. Es ist jedoch denkbar, nur jeweils eine der vorstehen genannten Vorgehensweisen zur Durchführung des Verfahrens anzuwenden.

Für die Durchführung des iterativen Verfahrens wird bevorzugt ein Least-Mean- Square-Verfahren angewandt (s. bspw. DE 34 46 658 C2), welches in einem iterativen Prozess die beste Lösung liefert. Dazu wird in einer nachgeschalteten Zielbahnbestimmungseinheit 30 mittels der Eigenpositionen $X_E, Y_E$ und einer angenommenen Anfangsposition $X_0, Y_0$ des Ziels eine angenommene Zielbahn Z(i, j) ermittelt. Aus den gemessenen Peilwinkeln $B_{meas}$, den geschätzten Peilwinkeln $B_{est}$ und dem bzw. den vom Entscheidungsmodul 28 erhaltenen Supportwert bzw. Supportwerten 29 wird zu der angenommenen Zielbahn eine Bewertungsgröße ermittelt, welche zusammen mit der Zielbahn der Auswertungseinheit übergeben wird. Die zugehörige Bewertungsgröße oder eine aus der Bewertungsgröße abgeleitete Größe wird dann mit einem vorgebbaren Schwellenwert verglichen.

Wird dieser Schwellenwert unterschritten, wird diese Zielbahn als beste Zielbahn $Z_{best}$ bestimmt und zusammen mit den Zielparametern und der Bewertungsgröße einer Darstellungseinheit 34 übergeben.

Wird dieser Schwellenwert jedoch von der Bewertungsgröße oder einer aus der Bewertungsgröße abgeleiteten Größe nicht unterschritten, werden zum iterativen Minimieren dieser Bewertungsgröße zu dieser Zielbahn zugehörige Ortskomponenten und/oder Geschwindigkeitskomponenten angepasst und der Zielbahnbestimmungseinheit 30 übergeben, welche erneut eine Zielbahn auf der Grundlage von geänderten Orts- und/oder Geschwindigkeitskomponenten annimmt. Unter Berücksichtigung der vom Entscheidungsmodul 28 übergebenen Supportwerte 29 wird eine zugehörige Bewertungsgröße ermittelt und der Auswertungseinheit 32 übergeben. In der Auswertungseinheit 32 erfolgt erneut ein Vergleich mit dem Schwellenwert.

Der vorstehend beschriebene Vorgang des iterativen Minimierens der Bewertungsgröße oder einer aus der Bewertungsgröße abgeleiteten Größe wiederholt sich solange, bis der vorgebbare Schwellenwert unterschritten wird und die zugehörige Zielbahn als beste Zielbahn $Z_{best}$ der Darstellungseinheit 34 übergeben wird.

Für den Fall, dass der gesamte Lösungsraum berechnet wird, ermittelt die Zielbahnbestimmungseinheit 30 eine Vielzahl von Zielbahnen Z(i, j). Zu jeder Zielbahn Z(i, j) wird eine zugehörige Bewertungsgröße Q(i, j) aus den gemessenen Peilwinkeln $B_{meas}$, den angenommenen Peilwinkeln $B_{est}$ und den vom Entscheidungsmodul 28 übergebenen Supportwerten 29 ermittelt. Die nachgeschaltete Auswertungseinheit 32 ermittelt dann eine beste Zielbahn $Z_{best}$, welche eine eine beste Qualität anzeigende Bewertungsgröße aufweist, und übergibt diese beste Zielbahn $Z_{best}$ mit den zugehörigen Zielparametern zusammen mit einer Vielzahl von Zielbahnen $Z(i, j)$, deren Bewertungsgröße $Q(i, j)$ oder eine aus der Bewertungsgröße abgeleitete Größe einen vorgebbaren Schwellenwert unterschritten haben, der Darstellungseinheit 34. Die Verteilung der Bewertungsgrößen $Q(i, j)$ oder die Verteilung einer aus diesen Bewertungsgrößen $Q(i, j)$ abgeleiteten Größe gibt Aufschluss über die Zuverlässigkeit der angegebenen besten Lösung.

Optional ist für die vorstehend genannte Ausführung des erfindungsgemäßen Verfahrens eine Frequenzanalyse vorgesehen. Die Empfangssignale 21 der Wandleranordnung 20 werden dazu nach dem Richtungsbildner 22 einer Frequenzanalyse-Schaltung 36 übergeben. Hier wird eine Empfangsfrequenz $F_{meas}$ gemessen sowie eine angenommene Dopplerfrequenz Fest zum Peilwinkel aus einer geschätzten vom Ziel abgestrahlten oder gesendeten Sendefrequenz $F_{Sest}$ ermittelt. Die Zielbahnbestimmungseinheit 30 ermittelt aus den vorliegenden Eingangsdaten eine Frequenzdifferenz aus gemessener Empfangsfrequenz $F_{meas}$ und angenommener Dopplerfrequenz Fest sowie eine Peilwinkeldifferenz aus gemessenen Peilwinkeln $B_{meas}$ und angenommenen Peilwinkeln $B_{est}$. Aus der Frequenzdifferenz und der Peilwinkeldifferenz wird dann unter Berücksichtigung der Supportwerte 29 zu jeder angenommenen Zielbahn $Z(i, j)$ eine Bewertungsgröße $Q(i, j)$ ermittelt.

Die Ermittlung der besten Zielbahn $Z_{best}$ erfolgt analog zu den vorstehenden Ausführungen, wobei jedoch beim iterativen Minimieren nicht nur die Peilwinkeldifferenz mit Berücksichtigung der Supportwerte 29 sondern ebenso die Frequenzdifferenzen einbezogen werden.

Die Zielparameter der optimierten Lösung werden in einer Darstellungseinheit 34 derart aufbereitet, um sie auf einer Anzeigevorrichtung 38 numerisch und/oder visuell auszugeben bzw. darzustellen. Liefert das vorstehend genannte Verfahren keine Vielzahl von möglichen Zielbahnen $Z(i, j)$, sondern lediglich eine beste Zielbahn $Z_{best}$ mit zugehörigen Zielparametern, werden diese als Zielposition auf dem Anzeigemittel 38 dargestellt.

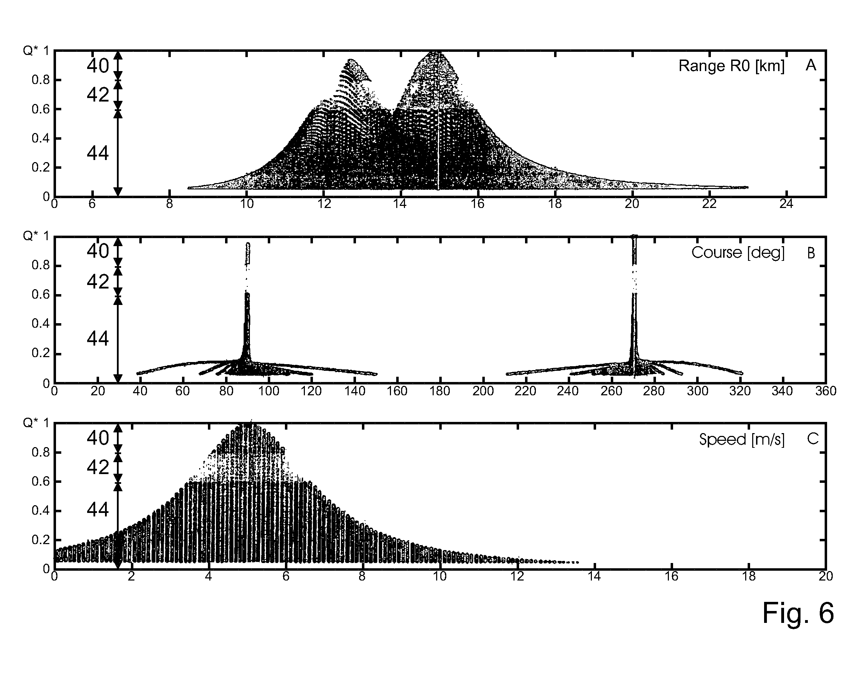

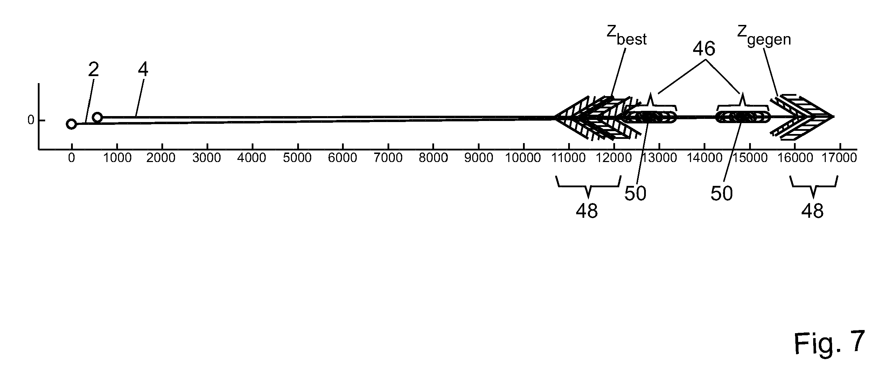

Werden jedoch eine Vielzahl von Zielbahnen $Z(i, j)$ mit zugehörigen Bewertungsgrößen $Q(i, j)$ ermittelt, lassen sich die möglichen Zielparameter des gesamten Lösungsraums darstellen. Dabei kann die Visualisierung der Zielparameter auf verschiedene Weisen erfolgen. Die Darstellung wird anhand von Fig. 6 A-C und Fig. 7 nachfolgend erläutert.

Für die Darstellung einer Qualität der zu ermittelnden Zielparameter wird bevorzugt die oben angegebene Bewertungsgröße $Q(i, j)$ in einen inversen und auf den Bereich zwischen 0 und 1 normierten Wert, nachfolgend Qualitätsmaß genannt, überführt. Somit wird im Folgenden $Q(i, j)$ durch $Q^*(i, j) = min(Q)/Q(i, j)$ ersetzt.

Fig. 6 A-C zeigen drei Diagramme, in denen das Qualitätsmaß $Q^*(i, j)$ jeweils über der Zielentfernung (s. Fig. 6A), über den Zielkurs (s. Fig. 6B) und über die Zielgeschwindigkeit (s. Fig. 6C) aufgetragen ist.

Mittels geeigneter Einfärbungen lässt sich die Visualisierung des Qualitätsmaßes $Q^*$ verbessern. Dazu werden bspw. Symbole für Werte des Qualitätsmaßes $Q^*$ größer als ein oberer Wert 40 in einer ersten Farbe, Symbole für Werte des Qualitätsmaßes $Q^*$ unterhalb eines zweiten Wertes 44 in einer zweiten Farbe und Symbole für Werte in einem dazwischenliegenden Wertebereich 42 in einer dritten Farbe dargestellt. Die Anzahl der Wertebereiche 40, 42, 44 ist jedoch nicht auf drei beschränkt. Vielmehr sind beliebig viele Wertebereiche, denen jeweils eine andere Farbe zugeordnet wird, ebenfalls möglich.

Fig. 6 A-C zeigen beispielhaft Diagramm-Darstellungen der Lösungsräume der jeweiligen zu bestimmenden Zielparameter. In diesem Fall wurde für die Bestimmung der Zielparameter ein Geschwindigkeits-Supportwert $V_{sup}$ berücksichtigt. Dadurch ist der Lösungsraum für die Geschwindigkeit recht schmal (s. Fig. 6C).

Das Diagramm in Fig. 6A zeigt mit den beiden dargestellten Glockenkurven zwei potentielle Lösungsgebiete für die Zielentfernung an und Fig. 6B einen anlaufenden Kurs und einen ablaufenden Kurs, wobei beide Lösungen annähernd gleich wahrscheinlich sind. Eine derartige Konstellation ist bspw. möglich, wenn das Trägerfahrzeug einen Start-Lagewinkel von ca. 0 Grad zum Ziel aufweist.

Fig. 7 zeigt eine alternative Darstellung des Lösungsraumes aus Fig. 6A-C. Es sind in einer Lage-Darstellung, insbesondere einer PPI-Darstellung, der erste Peilstrahl 2 und der letzte Peilstrahl 4 aufgetragen.

Anhand der Zielbahnen $Z(i, j)$ werden zu den Peilstrahlen 2,4 ein Entfernungslösungsraum 46 ermittelt, indem zu der jeweiligen darzustellenden Zielbahn eine mögliche Zielposition zu einer Anfangsentfernung auf dem ersten Peilstrahl 2 und eine mögliche Zielposition zu einer Endentfernung auf dem letzten Peilstrahl 4 mit dem jeweiligen zugehörigen Qualitätsmaß $Q^*(i, j)$ dargestellt wird. Bevorzugt weist der Entfernungslösungsraum 46 einen inneren Bereich in einer ersten Farbe, welcher eine hohe Qualität anzeigt, einen äußeren Bereich in einer zweiten Farbe, welcher eine geringere Qualität anzeigt und einen eine mittlere Qualität anzeigenden Bereich in der Mitte auf.

Ferner wird zu den Zielbahnen $Z(i, j)$ eine zukünftige Zielposition des Ziels ermittelt, wobei die zukünftige Zielposition aus den zu der jeweiligen Zielbahn zugehörigen Zielparametern für einen vorbestimmten Zeitraum ermittelt wird. Diese zukünftigen Zielpositionen werden mit der zugehörigen Qualitätsangabe $Q^*(i, j)$ als zukünftiges Erwartungsgebiet 48 in dem Lösungsraum dargestellt.

Fig. 7 verdeutlicht das Vorhandensein einer potentiellen Gegenkurssituation, insbesondere bei einem Start-Lagewinkel des Trägerfahrzeugs von ca. 0 Grad zum Ziel. In diesem Fall werden in der Lage-Darstellung für alle Zielbahnen $Z(i, j)$, deren Qualitätsmaß $Q^*(i, j)$ eine vorgegebene Schwelle überschritten haben, z.B. $Q^*(i, j) > 0,8$, von einem zugehörigen Kurs/Geschwindigkeits-Vektor die Pfeilspitzen dargestellt. Es sind viele an- und ablaufende Lösungen in Fig. 7 erkennbar. Ferner sind die beste Zielbahn $Z_{best}$ sowie eine mögliche beste Gegenkurslösung $Z_{gegen}$ jeweils in Vektor-Form dargestellt.

Die Berücksichtigung eines Geschwindigkeits-Supportwertes $V_{sup}$ liefert einen relativ schmalen Lösungsraum für die Geschwindigkeit. Dadurch sind die an- und ablaufenden Lösungen in der Darstellung gemäß Fig. 7 gut getrennt. Die unterschiedlichen Startpunkte 50 der an- bzw. ablaufenden Lösungen entsprechen den zwei Glockenkurven des Entfernungslösungsraums aus Fig. 6A.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zum Bestimmen einer besten Zielbahn mit zugehörigen Zielparametern aus einer Mehrzahl von Zielbahnen durch richtungsselektiven Empfang von Schallwellen, die von einem Ziel abgestrahlt oder gesendet werden, mit einer Anordnung (20) von Wasserschallaufnehmern einer Sonar-Empfangsanlage aus geschätzten Peilwinkeln ($B_{est}$), die aus geschätzten Positionen des Zieles ermittelt werden, und von der Anordnung (20) gemessenen Peilwinkeln ($B_{meas}$), wobei zwischen gemessenen Peilwinkeln ($B_{meas}$) und geschätzten Peilwinkeln ($B_{est}$) eine Peilwinkeldifferenz ermittelt wird,
und mindestens ein Supportwert (29) aus einem Satz möglicher Supportwerte (27) bestimmt wird,
mehrere Zielbahnen ($Z(i, j)$) mit jeweils zugehörigen Zielparametern und jeweils einer zugehörigen Bewertungsgröße ($Q(i, j)$) ermittelt werden, wobei ein zu einem ersten gemessenen Peilwinkel zugehöriger erster Peilstrahl sowie ein zu einem zuletzt gemessenen Peilwinkel zugehöriger letzter Peilstrahl festgelegt werden und wobei die Zielbahnen auf dem ersten Peilstrahl in einem Anfangspunkt beginnen und auf dem letzten Peilstrahl in einem Endpunkt enden und die Bewertungsgröße ($Q(i, j)$) aus der zur jeweiligen Zielbahn zugehörigen Peilwinkeldifferenz und dem Supportwert (29) oder den Supportwerten (29) ermittelt wird und
eine beste Zielbahn ($Z_{best}$) mit zugehörigen Zielparametern anhand der zugehörigen Bewertungsgröße ermittelt wird, wobei die zugehörigen Zielparameter als die zu bestimmenden Zielparameter ausgegeben werden,
**dadurch gekennzeichnet, dass**
Empfangssignale (21) der Anordnung einer Frequenzanalyse unterzogen werden und die Frequenz mindestens einer Spektrallinie als Empfangsfrequenz ($F_{meas}$) zu jeweils einem Peilwinkel bestimmt wird, eine Frequenzdifferenz aus der Empfangsfrequenz ($F_{meas}$) und einer geschätzten Dopplerfrequenz ($F_{est}$) zu jeweils einem Peilwinkel ermittelt wird, wobei die geschätzte Dopplerfrequenz ($F_{est}$) aus einer geschätzten, vom Ziel abgestrahlten Sendefrequenz ($F_{Sest}$) und einer Dopplerverschiebung bestimmt wird und
die Bewertungsgröße ($Q(i, j)$) aus der Peilwinkeldifferenz, den Frequenzdifferenzen und mindestens eines Supportwertes (29), insbesondere eines Frequenz-Supportwertes ($F_{sup}$), für eine oder mehrere Zielbahnen ($Z(i, j)$) ermittelt wird.

2. Verfahren nach Anspruch 1,
**dadurch gekennzeichnet, dass**
Daten über mögliche Supportwerte (27) gesammelt werden, welche angeben, welche Supportwerte aus einer Menge aller Supportwerte zur Verfügung stehen, Daten über die Zuverlässigkeit der möglichen Supportwerte (27) gesammelt werden, die Daten über die möglichen Supportwerte (27) mit den Daten über deren Zuverlässigkeit einem Entscheidungsmodul (28) übergeben werden, welches daraus den oder die Supportwerte (29) mit jeweils einem zugehörigen Gewichtsfaktor ermittelt, welche bei der Durchführung des Verfahrens berücksichtigt werden.

3. Verfahren nach Anspruch 1 oder 2,
**dadurch gekennzeichnet, dass**
die Bewertungsgröße ($Q(i, j)$) einer Zielbahn ($Z(i, j)$) aus der Summe der, insbesondere gewichteten, Quadrate von Differenzen der entlang der Zielbahn ($Z(i, j)$) angenommenen Peilwinkel ($B_{est}$) und der zugehörigen gemessenen Peilwinkel ($B_{meas}$) unter Berücksichtigung mindestens eines, insbesondere gewichteten, Supportwertes (29) berechnet wird.

4. Verfahren nach einem der vorhergehenden Ansprüche,
**dadurch gekennzeichnet, dass**
während jedem Verarbeitungszyklus von einer Reihe aufeinanderfolgender Verarbeitungszyklen die Bewertungsgröße (Q(i, j)) oder eine aus der Bewertungsgröße abgeleiteten Größe unter Berücksichtigung mindestens eines Supportwertes (29) iterativ minimiert wird und bei Erreichen des Minimums die zur minimalen Bewertungsgröße zugehörige Zielbahn ($Z_{best}$) die Zielparameter der besten Lösung liefert.

5. Verfahren nach einem der Ansprüche 1 bis 3,
   **dadurch gekennzeichnet, dass**
   eine Vielzahl unterschiedlicher Zielbahnen (Z(i, j)) ermittelt werden, wobei ein zu einem ersten gemessenen Peilwinkel zugehöriger erster Peilstrahl (2) sowie ein zu einem zuletzt gemessenen Peilwinkel zugehöriger letzter Peilstrahl (4) festgelegt werden und jede angenommene Zielbahn auf dem ersten Peilstrahl (2) in dem Anfangspunkt (6) beginnt und auf dem letzten Peilstrahl (4) in dem Endpunkt (8) endet,
   die Bewertungsgröße (Q(i, j)) unter Berücksichtigung mindestens eines Supportwertes (29) zu jeder Zielbahn ermittelt wird und eine eine beste Lösung angebende beste Zielbahn ($Z_{bes}$) anhand dieser Bewertungsgrößen (Q(i, j)) ermittelt wird, deren zugehörige Zielparameter als beste Lösung ausgegeben werden.

6. Verfahren nach Anspruch 5,
   **dadurch gekennzeichnet, dass**
   zum Bestimmen der Zielparameter nur diejenigen Zielbahnen (Z(i, j)) berücksichtigt werden, deren zugehörige Bewertungsgröße (Q(i, j)) wenigstens einen vorbestimmten Schwellenwert unterschritten hat.

7. Verfahren nach einem der Ansprüche 5 bis 6,
   **dadurch gekennzeichnet, dass**
   während jedem Verarbeitungszyklus die Zielparameter aller oder einer Vielzahl der Zielbahnen (Z(i, j)) mittels eines oder mehrerer Diagramme eines aus der Bewertungsgröße (Q(i, j)) hervorgehenden Qualitätsmaßes (Q*(i, j)) über den Zielkurs und /oder über die Zielgeschwindigkeit und/oder über die Zielentfernung graphisch visualisiert auf einer Anzeigevorrichtung (38) dargestellt werden.

8. Verfahren nach einem der Ansprüche 4 bis 5,
   **dadurch gekennzeichnet, dass**
   während jedem Verarbeitungszyklus zu allen oder einer Vielzahl der Zielbahnen (Z(i, j)) zukünftige Zielpositionen des Zieles ermittelt werden und
   ein die möglichen Zielparameter beinhaltender Lösungsraum, welcher ein die zukünftigen Zielpositionen darstellendes zukünftiges Erwartungsgebiet (48), wenigstens einen Entfernungslösungsraum (46) zum Anzeigen der möglichen Lösungen für die Zielentfernung und/oder die beste Zielbahn ($Z_{bes}$) aufweist, graphisch und/oder numerisch auf einer Anzeigevorrichtung (38) dargestellt wird.

9. Vorrichtung zur Bestimmung einer besten Zielbahn mit zugehörigen Zielparametern aus einer Mehrzahl von Zielbahnen durch richtungsselektiven Empfang von Schallwellen, die von einem Ziel abgestrahlt oder gesendet werden, mit einer Anordnung (20) von Wasserschallaufnehmern einer Sonar-Empfangsanlage, wobei die Vorrichtung derart ausgebildet ist, um aus geschätzten Positionen des Zieles geschätzte Peilwinkel ($B_{est}$) und mittels der Anordnung (20) gemessene Peilwinkel ($B_{meas}$) zu ermitteln, und wobei zwischen gemessenen Peilwinkeln ($B_{meas}$) und geschätzten Peilwinkeln ($B_{est}$) eine Peilwinkeldifferenz ermittelbar ist,
   ein Entscheidungsmodul (28), welches derart ausgebildet ist, um mindestens einen Supportwert (29) aus einem Satz möglicher Supportwerte (27) zu bestimmen,
   eine Zielbahnbestimmungseinheit (30), welche derart ausgebildet ist, um mehrere Zielbahnen (Z(i, j)) mit jeweils zugehörigen Zielparametern und jeweils einer zugehörigen Bewertungsgröße (Q(i, j)) zu ermitteln, wobei ein zu einem ersten gemessenen Peilwinkel zugehöriger erster Peilstrahl sowie ein zu einem zuletzt gemessenen Peilwinkel zugehöriger letzter Peilstrahl festgelegt werden und wobei die Zielbahnen auf dem ersten Peilstrahl in einem Anfangspunkt beginnen und auf dem letzten Peilstrahl in einem Endpunkt enden und die Bewertungsgröße (Q(i, j)) aus der zur jeweiligen Zielbahn zugehörigen Peilwinkeldifferenz und dem Supportwert (29) oder den Supportwerten (29) ermittelbar ist, eine Auswertungseinheit (32), welche derart ausgebildet ist, um eine beste Zielbahn ($Z_{bes}$) mit zugehörigen Zielparametern anhand der zugehörigen Bewertungsgröße zu ermitteln, wobei die zugehörigen Zielparameter als die zu bestimmenden Zielparameter festlegbar sind,
   **gekennzeichnet durch**
   eine Frequenzanalyse-Schaltung (36), welche derart ausgebildet ist, um Empfangssignale (21) der Anordnung einer Frequenzanalyse zu unterziehen, wobei die Frequenz mindestens einer Spektrallinie als Empfangsfrequenz ($F_{meas}$) zu jeweils einem Peilwinkel bestimmbar ist, eine Ausbildung der Zielbahnbestimmungseinheit (30) derart, dass eine Frequenzdifferenz aus der Empfangsfrequenz ($F_{meas}$) und einer geschätzten Dopplerfrequenz ($F_{est}$) zu jeweils einem Peilwinkel ermittelbar ist, wobei die geschätzte Dopplerfrequenz ($F_{est}$) aus einer geschätzten, vom Ziel abgestrahlten Sendefrequenz ($F_{Sest}$) und einer Dopplerverschiebung bestimmbar ist,
sowie dass, die Bewertungsgröße (Q(i, j)) aus der Peilwinkeldifferenz, den Frequenzdifferenzen und mindestens eines Supportwertes (29), insbesondere eines Frequenz-Supportwertes ($F_{sup}$), für eine oder mehrere Zielbahnen (Z(i, j)) ermittelbar ist.

10. Vorrichtung nach Anspruch 9,
**gekennzeichnet durch**
ein Datenerfassungsmodul, welches derart ausgebildet ist, um Daten von möglichen Supportwerten (27) zu erfassen, wobei die Daten Angaben aufweisen, welche Supportwerte aus einer Menge aller Supportwerte verfügbar sind, eine Datenerfassung von Zuverlässigkeiten der möglichen Supportwerte (27),
eine weitere Ausbildung des Entscheidungsmoduls (28) derart, dass die Daten über die möglichen Supportwerte (27) mit den Daten über deren Zuverlässigkeit derart ausgewertet werden, um den oder die Supportwerte (29) mit jeweils einem zugehörigen Gewichtsfaktor zu ermitteln.

11. Vorrichtung nach Anspruch 9 bis 10,
**gekennzeichnet durch**
eine Ausbildung der Zielbahnbestimmungseinheit (30) derart, dass während jedem Verarbeitungszyklus von einer Reihe aufeinanderfolgender Verarbeitungszyklen die Bewertungsgröße (Q(i, j)) oder eine aus der Bewertungsgröße abgeleiteten Größe unter Berücksichtigung mindestens eines Supportwertes (29) iterativ minimierbar ist und bei Erreichen des Minimums die Zielparameter der besten Lösung, welche zur minimalen Bewertungsgröße zugehörig ist, lieferbar sind.

12. Vorrichtung nach Anspruch 9 bis 11,
**gekennzeichnet durch**
eine Ausbildung der Zielbahnbestimmungseinheit (30) derart, dass eine Vielzahl unterschiedlicher Zielbahnen (Z(i, j)) ermittelbar sind, wobei ein zu einem ersten gemessenen Peilwinkel zugehöriger erster Peilstrahl (2) sowie ein zu einem zuletzt gemessenen Peilwinkel zugehöriger letzter Peilstrahl (4) festlegbar sind und jede angenommene Zielbahn derart bildbar ist, dass sie auf dem ersten Peilstrahl (2) in dem Anfangspunkt (6) beginnt und auf dem letzten Peilstrahl (4) in dem Endpunkt (8) endet, sowie dass die Bewertungsgröße (Q(i, j)) unter Berücksichtigung mindestens eines Supportwertes (29) zu jeder Zielbahn ermittelbar ist und eine beste Lösung angebende beste Zielbahn ($Z_{bes}$) anhand dieser Bewertungsgröße (Q(i, j)) ermittelbar ist, deren zugehörige Zielparameter als beste Lösung darstellbar sind.

13. Vorrichtung nach Anspruch 12
**gekennzeichnet durch**
eine Darstellungseinheit (34), welche derart ausgebildet ist, um während jedem Verarbeitungszyklus die Zielparameter aller oder einer Vielzahl der Zielbahnen (Z(i, j)) mittels mehrerer Diagramme eines aus der Bewertungsgröße (Q(i, j)) hervorgehenden Qualitätsmaßes (Q*(i, j)) über den Zielkurs und/oder über die Zielgeschwindigkeit und/oder die Zielentfernung graphisch visualisiert auf einer Anzeigevorrichtung (38) darzustellen, und/oder zu allen oder eine Vielzahl von Zielbahnen (Z(i, j)) zukünftige Zielpositionen des Zieles zu ermitteln und einen die möglichen Zielparameter beinhaltenden Lösungsraum, welcher ein die zukünftigen Zielpositionen darstellendes Erwartungsgebiet (48), wenigstens einen Entfernungslösungsraum (46) zum Anzeigen der möglichen Lösungen für die Zielentfernung und/oder die beste Zielbahn ($Z_{bes}$) aufweist, graphisch und/oder numerisch auf einer Anzeigevorrichtung (38) dazustellen.

## Claims

1. Method for determining a best target trajectory with associated target parameters from a plurality of target trajectories by the direction-selective reception of sound waves radiated from or transmitted from a target, with an arrangement (20) of waterborne sound receivers of a sonar receiving system consisting of estimated bearing angles ($B_{est}$) which are determined from estimated positions of the target, and of bearing angles ($B_{meas}$) measured by the arrangement (20), wherein a bearing angle difference is determined between measured bearing angles ($B_{meas}$) and estimated bearing angles ($B_{est}$),
and at least one support value (29) is determined from a set of possible support values (27),
several target trajectories (Z(i, j)) with associated target parameters and an associated evaluation magnitude (Q(i, j)) are determined, wherein a first bearing line associated with a first measured bearing angle and a last bearing line associated with a last-measured bearing angle are determined, and wherein the target trajectories begin on the first bearing line at a starting point and end on the last bearing line at an end point, and the evaluation magnitude ($Q(i, j)$) is determined from the bearing angle difference associated with the particular target trajectory and from the support value (29) or the support values (29), and

a best target trajectory ($Z_{best}$) with associated target parameters is determined using the associated evaluation magnitude, wherein the associated target parameters are outputted as the target parameters to be determined,

**characterized by that**

received signals (21) of the arrangement are subjected to a frequency analysis and the frequency of at least one spectral line is determined as the received frequency ($F_{meas}$) for each bearing angle, a frequency difference from the received frequency ($F_{meas}$) and from an estimated Doppler frequency ($F_{est}$) is determined for each bearing angle ,wherein the estimated Doppler frequency ($F_{est}$) is determined from an estimated transmitting frequency ($F_{Sest}$) emitted by the target and from a Doppler shift, and that the evaluation magnitude ($Q(i, j)$) is determined from the bearing angle difference, the frequency differences and at least one support value (29), in particular a frequency support value ($F_{sup}$), for one more target trajectories ($Z(i, j)$).

2. Method according to Claim 1,
**characterized by that**
data is collected for possible support values (27) which indicates which support values are available from a number of all support values, and data about the reliability of the possible support values (27) is collected, which data about the possible support values (27) is transmitted to a decision module (28) with the data about their reliability, which module determines from them the support value or values (29) with an associated weighting factor which are considered during the carrying out of the method.

3. Method according to Claim 1 or 2,
**characterized by that**
the evaluation magnitude ($Q(i, j)$) of a target trajectory ($Z(i, j)$) is calculated from the sum of the in particular weighted squares of differences of the bearing angles ($B_{est}$) received along the target trajectory ($Z(i, j)$) and of the associated measured bearing angles ($B_{meas}$), taking into consideration at least one in particular weighted support value (29).

4. Method according to one of the previous claims,
**characterized by that**
during each processing cycle of a series of successive processing cycles the evaluation magnitude ($Q(i, j)$) or a magnitude derived from the evaluation magnitude is iteratively minimized taking into account at least one support value (29) and upon achieving the minimum the target trajectory ($Z_{best}$) associated with the minimal evaluation magnitude supplies the target parameters of the best solution.

5. Method according to one of Claims 1 to 3,
**characterized by that**
a plurality of different target trajectories ($Z(i, j)$) is determined, wherein a first bearing line (2) associated with a first measured bearing angle and a last bearing line (4) associated with a last-measured bearing angle are determined and each received target trajectory begins on the first bearing line (2) at the starting point (6) and ends on the last bearing line (4) at the end point (8),
the evaluation magnitude ($Q(i, j)$) is determined taking into account at least one support value (29) for each target trajectory and a best target trajectory ($Z_{bes}$) indicating a best solution is determined using these evaluation magnitudes ($Q(i, j)$) whose associated target parameters are outputted as the best solution.

6. Method according to Claim 5,
**characterized by that**
in order to determine the target parameters only those target trajectories ($Z(i, j)$) are considered whose associated evaluation magnitude ($Q(i, j)$) has dropped below at least one predetermined threshold value.

7. Method according to one of Claims 5 to 6,
**characterized by that**
during each processing cycle the target parameters of all or of a plurality of the target trajectories ($Z(i, j)$) are represented by one or more diagrams of a quality measurement ($Q*(i, j)$) stemming from the evaluation magnitude ($Q(i, j)$) about the target course and/or about the target speed and/or about the target distance graphically visualized on a display device (38).

8. Method according to one of Claims 4 to 5,

**characterized by that**

during every processing cycle future target positions of the target are determined for all or for a plurality of the target trajectories (Z(i, j)) and

a solution space containing the possible target parameters, which comprises a future expectation area (48) showing the future target positions, and comprises at least one distance solution space (46) for displaying the possible solutions for the target distance and/or the best target trajectory ($Z_{bes}$) is shown graphically and/or numerically on a display device (38).

9. Device for determining a best target trajectory with associated target parameters from a plurality of target trajectories by the direction-selective reception of sound waves radiated from or transmitted from a target, with an arrangement (20) of waterborne sound receivers of a sonar receiving system, wherein the device is constructed in such a manner as to determine bearing angles ($B_{est}$) estimated from estimated positions of the target and to determine bearing angles ($B_{meas}$) measured with the arrangement (20), and wherein a bearing angle difference can be determined between measured bearing angles ($B_{meas}$) and estimated bearing angles ($B_{est}$),

a decision module (28) constructed in such a manner as to determine at least one support value (29) from a set of possible support values (27),

a target trajectory determination unit (30) which is constructed in such a manner as to determine several target trajectories (Z(i, j)) with associated target parameters and with an associated evaluation magnitude (Q(i, j)), wherein a first bearing line associated with a first measured bearing angle and a last bearing line associated with a last-measured bearing angle are determined, and wherein the target trajectories begin on the first bearing line at a starting point and end on the last bearing line at an end point,

and the evaluation magnitude (Q(i, j)) can be determined from the bearing angle difference associated with the particular target trajectory and from the support value (29) or the support values (29),

an evaluation unit (32) constructed in such a manner as to determine a best target trajectory ($Z_{bes}$) with associated target parameters using the associated evaluation magnitude, wherein the associated target parameters can be set as the target parameters to be determined,

**characterized by**

a frequency analysis circuit (36) which is constructed in such a manner as to subject received signals (21) of the arrangement to a frequency analysis, wherein the frequency of at least one spectral line can be determined as the received frequency ($F_{meas}$) for a bearing angle,

a construction of the target trajectory determination unit (30) in such a manner that a frequency difference from the received frequency ($F_{meas}$) and from an estimated Doppler frequency ($F_{est}$) can be determined for each bearing angle, wherein the estimated Doppler frequency ($F_{est}$) can be determined from an estimated transmitting frequency ($F_{Sest}$) emitted by the target and from a Doppler shift, and

that the evaluation magnitude (Q (i, j)) can be determined from the bearing angle difference, the frequency differences and at least one support value (29), in particular a frequency support value ($F_{sup}$), for one more target trajectories (Z (i, j)).

10. Device according to Claim 9,
**characterized by**
a data detection module constructed in such a manner as to detect data of possible support values (27), wherein the data comprises information about which support values from a quantity of all support values are available,
a data detection of reliabilities of the possible support values (27),
another construction of the decision module (28) in such a manner that the data about the possible support values (27) with the data about their reliability is evaluated in such a manner as to determine the support value or support values (29) with an associated weighting factor.

11. Device according to Claim 9 to 10,
**characterized by**
a construction of the target trajectory determination unit (30) in such a manner that during each processing cycle of a series of successive processing cycles the evaluation magnitude (Q(i, j)) or a magnitude derived from the evaluation magnitude can be iteratively minimized taking into account at least one support value (29) and upon achieving the minimum the target parameters of the best solution associated with the minimal evaluation magnitude can be supplied.

12. Device according to Claims 9 to 11,
**characterized by**
a construction of the target trajectory determination unit (30) such that a plurality of different target trajectories (Z(i, j)) can be determined, wherein a first bearing line (2) associated with a first measured bearing angle and a last bearing line (4) associated with a last-measured bearing angle can be determined and each received target trajectory can be constructed in such a manner that it begins on the first bearing line (2) at the starting point (6) and ends on the last bearing line (4) at the end point (8) so that the evaluation magnitude (Q(i, j)) can be determined taking account of at least one support value (29) for each target trajectory and a best target trajectory ($Z_{bes}$) indicating a best solution can be determined using this evaluation magnitude (Q(i, j)), whose associated target parameters can be shown as the best solution.

**13.** Device according to Claim 12,
**characterized by**
a representation unit (34) which is constructed in such a manner that during each processing cycle the target parameters of all or of a plurality of the target trajectories (Z(i, j)) are represented by several diagrams of a quality measurement (Q*(i, j)) stemming from the evaluation magnitude (Q(i, j)) about the target course and/or about the target speed and/or about the target distance graphically visualized on a display device (38), and/or

future target positions of the target are determined for all or for a plurality of target trajectories (Z(i, j)) and a solution space containing the possible target parameters, which comprises an expectation area (48) containing the future target positions, at least one distance solution space (46) for displaying the possible solutions for the target distance and/or the best target trajectory ($Z_{bes}$) is shown graphically and/or numerically on a display device (38).

## Revendications

**1.** Procédé de détermination d'une trajectoire de cible la meilleure avec des paramètres de cible associés parmi une pluralité de trajectoires de cible par la réception sélective en fonction de la direction d'ondes sonores, qui sont réfléchies ou émises par une cible, au moyen d'un agencement (20) d'hydrophones d'une installation de réception sonar, à partir d'angles de relèvement estimés ($B_{est}$), qui sont déterminés à partir de positions estimées de la cible, et d'angles de relèvement mesurés ($B_{meas}$) par l'agencement (20), une différence d'angle de relèvement étant déterminée entre des angles de relèvement mesurés ($B_{meas}$) et des angles de relèvement estimés ($B_{est}$), et au moins une valeur d'appui (29) étant déterminée parmi un ensemble de valeurs d'appui possibles (27), plusieurs trajectoires de cible (Z(i, j)) avec respectivement des paramètres de cible associés et respectivement une grandeur d'évaluation (Q(i, j)) associée étant déterminées, une première ligne de relèvement associée à un premier angle de relèvement mesuré ainsi qu'une dernière ligne de relèvement associée à un angle de relèvement mesuré en dernier étant définies et les trajectoires de cible commençant à un point de départ sur la première ligne de relèvement et se terminant à un point final sur la dernière ligne de relèvement et la grandeur d'évaluation (Q(i, j)) étant déterminée à partir de la différence d'angle de relèvement associée à la trajectoire de cible respective et de la valeur d'appui (29) ou des valeurs d'appui (29) et une trajectoire de cible la meilleure ($Z_{best}$) avec des paramètres de cible associés étant déterminée à l'aide de la grandeur d'évaluation associée, les paramètres de cible associés étant sortis comme les paramètres de cible à déterminer,
**caractérisé en ce que**
des signaux de réception (21) de l'agencement sont soumis à une analyse de fréquence et la fréquence d'au moins une raie spectrale est déterminée comme fréquence de réception ($F_{meas}$) pour respectivement un angle de relèvement, une différence de fréquence entre la fréquence de réception ($F_{meas}$) et une fréquence Doppler estimée ($F_{est}$) est déterminée pour respectivement un angle de relèvement, la fréquence Doppler estimée ($F_{est}$) étant déterminée à partir d'une fréquence d'émission estimée ($F_{Sest}$) réfléchie par la cible et d'un déplacement Doppler et la grandeur d'évaluation (Q(i, j)) étant déterminée à partir de la différence d'angle de relèvement, des différences de fréquence et d'au moins une valeur d'appui (29), en particulier une valeur d'appui de fréquence ($F_{sup}$), pour une ou plusieurs trajectoires de cible (Z(i, j)).

**2.** Procédé selon la revendication 1,
**caractérisé en ce que**
des données concernant des valeurs d'appui possibles (27) sont recueillies, qui indiquent quelles valeurs d'appui d'un ensemble de toutes les valeurs d'appui sont à disposition, des données concernant la fiabilité des valeurs d'appui possibles (27) sont recueillies, les données concernant les valeurs d'appui possibles (27) sont transmises avec les données concernant leur fiabilité à un module de décision (28), qui détermine à partir de celles-ci la ou les valeurs d'appui (29) avec respectivement un facteur de pondération associé qui sont prises en compte lors de l'exécution du procédé.

**3.** Procédé selon la revendication 1 ou 2,
**caractérisé en ce que**
la grandeur d'évaluation (Q(i, j)) d'une trajectoire de cible (Z(i, j)) est calculée à partir de la somme des carrés, en particulier pondérés, de différences entre les angles de relèvement supposés ($B_{est}$) le long de la trajectoire de cible (Z(i, j)) et les angles de relèvement mesurés ($B_{meas}$) associés en tenant compte d'au moins une valeur d'appui (29), en particulier pondérée.

**4.** Procédé selon l'une des revendications précédentes,
**caractérisé en ce que**
pendant chaque cycle de traitement d'une série de cycles de traitement successifs, la grandeur d'évaluation (Q(i, j)) ou une grandeur dérivée de la grandeur d'évaluation est minimisée par itération en tenant compte d'au moins une valeur d'appui (29) et lorsque le minimum est atteint, la trajectoire de cible ($Z_{best}$) associée à la grandeur d'évaluation minimale fournit les paramètres de cible de la meilleure solution.

**5.** Procédé selon l'une des revendications 1 à 3,
**caractérisé en ce que**
une pluralité de trajectoires de cible (Z(i, j)) différentes sont déterminées, une première ligne de relèvement (2) associée à un premier angle de relèvement mesuré ainsi qu'une dernière ligne de relèvement (4) associée à un angle de relèvement mesuré en dernier étant définies et chaque trajectoire de cible supposée commençant au point de départ (6) sur la première ligne de relèvement (2) et se terminant au point final (8) sur la dernière ligne de relèvement (4),
la grandeur d'évaluation (Q(i, j)) est déterminée en tenant compte d'au moins une valeur d'appui (29) pour chaque trajectoire de cible et, à l'aide de ces grandeurs d'évaluation (Q(i, j)), une trajectoire de cible la meilleure ($Z_{bes}$) indiquant une solution la meilleure est déterminée, dont les paramètres de cible associés sont sortis comme la meilleure solution.

**6.** Procédé selon la revendication 5,
**caractérisé en ce que**
pour la détermination des paramètres de cible, seules les trajectoires de cible (Z(i, j)) dont la grandeur d'évaluation (Q(i, j)) associée était inférieure à au moins une valeur seuil prédéfinie sont prises en compte.

**7.** Procédé selon l'une des revendications 5 à 6,
**caractérisé en ce que**
pendant chaque cycle de traitement, les paramètres de cible de toutes ou d'une pluralité des trajectoires de cible (Z(i, j)) sont représentés sur un dispositif d'affichage (38), visualisés graphiquement au moyen d'un ou de plusieurs diagrammes d'un critère de qualité (Q*(i, j)) résultant de la grandeur d'évaluation (Q(i, j)) en fonction du cap de la cible et/ou de la vitesse de la cible et/ou de la distance de la cible.

**8.** Procédé selon l'une des revendications 4 à 5,
**caractérisé en ce que**
pendant chaque cycle de traitement, des positions de cible futures de la cible sont déterminées pour toutes ou une pluralité des trajectoires de cible (Z(i, j)) et
un espace de solution contenant les paramètres de cible possibles, qui comporte une zone d'attente (48) future représentant les positions futures de la cible, au moins un espace de solution de distance (46) pour afficher les solutions possibles pour la distance de la cible et/ou la meilleure trajectoire de cible ($Z_{bes}$), est représenté graphiquement et/ou numériquement sur un dispositif d'affichage (38).

**9.** Dispositif de détermination d'une trajectoire de cible la meilleure avec des paramètres de cible associés parmi une pluralité de trajectoires de cible par la réception sélective en fonction de la direction d'ondes sonores, qui sont réfléchies ou émises par une cible, au moyen d'un agencement (20) d'hydrophones d'une installation de réception sonar, le dispositif étant conçu de manière à déterminer des angles de relèvement estimés ($B_{est}$) à partir de positions estimées de la cible et des angles de relèvement mesurés ($B_{meas}$) au moyen de l'agencement (20), et une différence d'angle de relèvement pouvant être déterminée entre des angles de relèvement mesurés ($B_{meas}$) et des angles de relèvement estimés ($B_{est}$),
un module de décision (28), qui est conçu de manière à déterminer au moins une valeur d'appui (29) parmi un ensemble de valeurs d'appui possibles (27),
une unité de détermination de trajectoire de cible (30), qui est conçue de manière à déterminer plusieurs trajectoires de cible (Z(i, j)) avec respectivement des paramètres de cible associés et respectivement une grandeur d'évaluation (Q(i, j)) associée, une première ligne de relèvement associée à un premier angle de relèvement mesuré ainsi qu'une dernière ligne de relèvement associée à un angle de relèvement mesuré en dernier étant définies et les trajectoires de cible commençant à un point de départ sur la première ligne de relèvement et se terminant à un point final sur la dernière ligne de relèvement et la grandeur d'évaluation (Q(i, j)) pouvant être déterminée à partir de la différence d'angle de relèvement associée à la trajectoire de cible respective et de la valeur d'appui (29) ou des valeurs d'appui (29),

une unité d'évaluation (32), qui est conçue de manière à déterminer une trajectoire de cible la meilleure ($Z_{bes}$) avec des paramètres de cible associés à l'aide de la grandeur d'évaluation associée, les paramètres de cible associés pouvant être définis comme les paramètres de cible à déterminer,

**caractérisé par**

un circuit d'analyse de fréquence (36), qui est conçu de manière à soumettre des signaux de réception (21) de l'agencement à une analyse de fréquence, la fréquence d'au moins une raie spectrale pouvant être déterminée comme fréquence de réception ($F_{meas}$) pour respectivement un angle de relèvement, une conception de l'unité de détermination de trajectoire de cible (30) de telle manière qu'une différence de fréquence entre la fréquence de réception ($F_{meas}$) et une fréquence Doppler estimée ($F_{est}$) peut être déterminée pour respectivement un angle de relèvement, la fréquence Doppler estimée ($F_{est}$) pouvant être déterminée à partir d'une fréquence d'émission estimée ($F_{Sest}$) réfléchie par la cible et d'un déplacement Doppler,

et que la grandeur d'évaluation (Q(i, j)) peut être déterminée à partir de la différence d'angle de relèvement, des différences de fréquence et d'au moins une valeur d'appui (29), en particulier une valeur d'appui de fréquence ($F_{sup}$), pour une ou plusieurs trajectoires de cible (Z(i, j)).

**10.** Dispositif selon la revendication 9,
**caractérisé par**

un module d'acquisition de données, qui est conçu de manière à acquérir des données de valeurs d'appui possibles (27), les données comportant des indications indiquant quelles valeurs d'appui d'un ensemble de toutes les valeurs d'appui sont disponibles,

une acquisition de données sur les fiabilités des valeurs d'appui possibles (27), une conception du module de décision (28) en outre de telle manière que les données sur les valeurs d'appui possibles (27) sont évaluées avec les données sur leur fiabilité de manière à déterminer la ou les valeurs d'appui (29) avec respectivement un facteur de pondération associé.

**11.** Dispositif selon la revendication 9 à 10,
**caractérisé par**

une conception de l'unité de détermination de trajectoire de cible (30) de telle manière que, pendant chaque cycle de traitement d'une série de cycles de traitement successifs, la grandeur d'évaluation (Q(i, j)) ou une grandeur dérivée de la grandeur d'évaluation peut être minimisée par itération en tenant compte d'au moins une valeur d'appui (29) et lorsque le minimum est atteint, les paramètres de cible de la meilleure solution, qui est associée à la grandeur d'évaluation minimale, peuvent être fournis.

**12.** Dispositif selon la revendication 9 à 11,
**caractérisé par**

une conception de l'unité de détermination de trajectoire de cible (30) de telle manière qu'une pluralité de trajectoires de cible (Z(i, j)) différentes peuvent être déterminées, une première ligne de relèvement (2) associée à un premier angle de relèvement mesuré ainsi qu'une dernière ligne de relèvement (4) associée à un angle de relèvement mesuré en dernier pouvant être définies et chaque trajectoire de cible supposée pouvant être formée de telle manière qu'elle commence au point de départ (6) sur la première ligne de relèvement (2) et se termine au point final (8) sur la dernière ligne de relèvement (4), et que la grandeur d'évaluation (Q(i, j)) peut être déterminée en tenant compte d'au moins une valeur d'appui (29) pour chaque trajectoire de cible et, à l'aide de cette grandeur d'évaluation (Q(i, j)), une trajectoire de cible la meilleure ($Z_{bes}$) indiquant une solution la meilleure peut être déterminée, dont les paramètres de cible associés peuvent être représentés comme la meilleure solution.

**13.** Dispositif selon la revendication 12,
**caractérisé par**

une unité de représentation (34), qui est conçue de manière à, pendant chaque cycle de traitement, représenter les paramètres de cible de toutes ou d'une pluralité des trajectoires de cible (Z(i, j)) sur un dispositif d'affichage (38), visualisés graphiquement au moyen de plusieurs diagrammes d'un critère de qualité (Q*(i, j)) résultant de la grandeur d'évaluation (Q(i, j)) en fonction du cap de la cible et/ou de la vitesse de la cible et/ou la distance de la cible, et/ou à déterminer des positions de cible futures de la cible pour toutes ou une pluralité des trajectoires de cible (Z(i, j)) et représenter un espace de solution contenant les paramètres de cible possibles, qui comporte une zone d'attente (48) représentant les positions futures de la cible, au moins un espace de solution de distance (46) pour afficher les solutions possibles pour la distance de la cible et/ou la meilleure trajectoire de cible ($Z_{bes}$), graphiquement et/ou numériquement sur un dispositif d'affichage (38).

Fig. 1

Fig. 2

Fig. 3

Fig. 4

Fig. 5

Fig. 6

Fig. 7

EP 2 699 933 B1

**IN DER BESCHREIBUNG AUFGEFÜHRTE DOKUMENTE**

**In der Beschreibung aufgeführte Patentdokumente**

- DE 3446658 C2
- DE 102008030053 A1
- DE 10129726 C2